# EUROPEAN PATENT SPECIFICATION

(11) **EP 3 009 280 B1**
(45) Date of publication and mention of the grant of the patent: **19.04.2017**
(21) Application number: 15160344.6
(22) Date of filing: 23.03.2015
(51) Int. Cl.: B60C 23/04, G07C 5/00, B60K 28/06, B60W 40/08

(54) **METHOD AND SYSTEM FOR IMPROVING ROAD SAFETY**
VERFAHREN UND SYSTEM ZUR ERHÖHUNG DER VERKEHRSSICHERHEIT
PROCÉDÉ ET SYSTÈME PERMETTANT D'AMÉLIORER LA SÉCURITÉ ROUTIÈRE

(30) Priority: 13.10.2014 MY PI2014703003
(43) Date of publication of application: 20.04.2016
(73) Proprietor: MY E.G. Services Berhad, 47800 Petaling Jaya, Selangor (MY)
(72) Inventor: Chan, Jason Ling Khee, Selangor (MY)
(74) Representative: Treeby, Philip David William

(56) References cited:
- EP-A1- 2 743 118
- WO-A2-2006/008527
- US-A- 6 073 062
- US-B1- 7 117 075

## Description

### TECHNICAL FIELD

The present invention generally relates to improvements of road safety. The invention particularly relates to a method and system for monitoring driver's alertness, the conditions of the vehicle being driven and the driver's driving habits.

### BACKGROUND ART

Vehicular accidents are one of the major causes of fatalities in most parts of the world. Although automobile safety has improved significantly in terms of structural integrity, braking and stability systems etc. since the development of the first steam engine by Nicolas Joseph Cugnot in 1769, the benefits of these safety improvements can be negated by the most reckless drivers.

Presently, certain commercial vehicles such as buses and trucks are installed with monitoring modules, commercially known as fleet / vehicular management systems that are able to monitor their drivers. These monitoring modules collect driving speed, braking speed, location of the vehicle and routes taken to make sure the drivers do not deviate from the predetermined routes, do not exceed the maximum allowable driving speed and do not make any unauthorized detours and stops.

However, these monitoring modules do not provide sufficient influence over a driver's driving habit to reduce the likelihood of vehicular accidents. Presently, there are a few patented technologies that aim to reduce vehicular accidents by going beyond the functions of a typical fleet / vehicular management system.

US publication 2002019703 discloses a safety system that detects and monitors various movements of a driven vehicle that includes violation of speeding, lane changes, U-turns, accelerations, decelerations, proximity with other vehicles, slow driving, and lane swerving etc.

US publication 2004236475 discloses a system which records unsafe driving events, including tailgating, frequent lane changes, speeding, rapid acceleration and deceleration. Each event is stored and used to generate a report that details the driver's driving style, the condition of the vehicles etc.

Korean publication 20130108778 discloses a safety driving control system and method for vehicles based on steady state visually evoked potentials to detect drowsiness of the driver based on camera and brainwave data.

US publication 20100156617 A1 discloses a device, method and program to determine a driver's awareness through analysis of the driver's brainwave patterns.

CN 201011570 discloses a vehicle driving recorder GPS to better measure the velocity of a driven vehicle. It has an identity card reader and an SD card reader that keeps track and stores each driver's history of speed misconducts.

Although these solutions provide influences over a driver's driving habits to reduce the likelihood of vehicular accidents, it can be seen from their disclosures that they aim to influence the driver while the vehicle is being driven. Such solutions may not be particularly helpful if the driver was already physically impaired due to lack of sleep induced drowsiness, intoxication and other conditions before the driver has even entered the vehicle. Moreover, these solutions do not take into consideration the condition of the vehicle being driven. Aside from a bad driver, a poorly maintained vehicle can also result in vehicular accidents. Rented vehicles are especially affected in this manner, since the maintenance history of each rented vehicle is not available to renting customers.

US 6,073,062 describes an operation management system for a moving body such as a vehicle using a mobile terminal. The present invention reliably and accurately records the operating conditions of vehicles, which enables management to gather accurate information regarding the work performed by a driver or crew in the moving vehicle. Moreover, the present invention realizes safe operation of a moving vehicle by detecting, during operation of a moving body, whether the moving body is exceeding the speed limit and informing the crew of this condition so that the driver will reduce speed to obey the speed limit. The present invention also deters theft of vehicles.

WO 2006/008527 describes a digital tachograph is described having a vehicle unit, a speed sensor, a smart card interface, a display, a communications interface and an alarm. The tachograph may read data from and/or write data to a smart card inserted into the smart card interface. In one embodiment, the smart card stores data regarding a person requesting permission to drive a vehicle, wherein the digital tachograph comprises means for preventing the operation of said vehicle if any of one or more conditions are not met. The tachograph may communicate with a remote server via the communications link. The tachograph may communicate with a driver via the display and the alarm.

EP 2,743,118 describes a method, system, and computer-readable medium facilitates monitoring a vehicle operator, the environment ahead of the vehicle, and/or forces acting on the vehicle during the course of vehicle operation to determine whether the vehicle operator is impaired (e.g., distracted, drowsy), log data relating to vehicle operator impairment for further analysis, and send the data to a server for analysis. The method, system, and computer-readable medium may monitor the vehicle operator, the environment ahead of the vehicle, and/or forces acting on the vehicle using either or both of optical sensors or accelerometers. In particular, one optical sensor may monitor the vehicle operator to detect eye blinks, head nods, head rotations, and/or gaze fixation. Another optical sensor may monitor the road ahead of the vehicle to detect lane deviation, lane centering, and time to collision. The accelerometers may detect acceleration in the direction of vehicle travel and/or lateral acceleration. The data gathered by the various sensors may be scored to determine whether to change a property and casualty insurance rate charged to vehicle operator and/or vehicle owner and/or vehicle policy.

### SUMMARY OF INVENTION

Therefore, it is highly desirable to devise a system that is not just able to promote safe driving, but one that goes a step further in making sure the driver is fit to operate the vehicle to begin with, and also determine the vehicle being driven is safe to operate.

According to one aspect of the invention, there is provided a road safety system for pre-installation in a vehicle, the system comprising
means to identify a driver and request a driving profile of the driver from a remote server,
means to evaluate the driver's consciousness level,
means to evaluate tire pressure levels of each tire installed on the vehicle, and
means to inform the driver prior to the vehicle being driven if the driver's driving profile, consciousness level or the tire pressure levels fall outside a set of predetermined safety conditions.

The invention introduces a novel system that identifies and checks the driver and vehicle it is pre-installed in to ascertain that the driver is in the condition to drive the vehicle, and that the vehicle is in the condition to be driven. Additionally, the system also requests for the driver's driving profile from a remote server. Based on the driver's driving profile, and the physical condition of the driver, the system then informs the driver if he or she is fit to handle the vehicle, and if the vehicle is in any way dangerous to operate, and alert the driver accordingly. All of this occurs before the vehicle is driven, preferably before ignition of the vehicle's engine.

In an embodiment, the system further comprises
means to update the driver's driving profile while the vehicle is being driven,
means to store the updated driver's driving profile temporarily within an onboard memory, and
means to transmit the updated driver's driving profile from the onboard memory to the remote server.

Once the vehicle has started moving, the system updates the driver's driving profile, first by storing the updated information in a temporary onboard memory, and then transmits the updated information to the remote server.

In another embodiment, the means to identify the driver comprises a fingerprint scanner and an identity card reader.

The fingerprint scanner and the identity card reader could be two separate devices, or a single biometric device being able to perform both functions.

According to one feature, the means to evaluate the driver's consciousness level comprises an electroencephalogram reader.

The electroencephalogram reader measures voltage fluctuations resulting from ionic current flows within the neurons of the driver's brain. By comparing the voltage fluctuations against known patterns, the system is able to determine the driver's consciousness state.

In yet another embodiment of the present invention, the means to evaluate tire pressures comprises a wireless tire pressure sensor.

The independently installed wireless tire pressure sensors inform the system in real time of the tire pressure of each installed tire.

According to one preferred feature, the driver's driving profile includes occurrences of driving violations.

In one embodiment, the driving violations include driving above a predetermined speed limit, harsh acceleration, harsh deceleration, over-speeding period, idling period, driver's eyes closure, reckless lane change, tailgating, and drowsiness.

The driver's driving profile therefore informs the system of the driver's expected driving behaviour, and so allows the system to determine how risky it would be to allow the driver to operate the vehicle, given the driver's consciousness and the condition of the vehicle.

A typical removable hard disk drive, a solid-state drive, a USB drive or the like can be used for temporary storage of the updated driving profile data.

In one preferred feature, communication between the system and the remote server is done wirelessly.

Since most vehicles are not physically linked to a communication server, all updates are done wirelessly, either through a 3G network, LTE network, a GSM network or the like. As it would be very bandwidth consuming to update the driver's driving profile in real time, most updated data will be first stored temporarily in the already mentioned hard disk drive or solid-state drive, and the data will be sent periodically to the remote server to update the existing driver's driving profile stored at the remote server.

In another aspect, there is provided a method for the improvement of road safety, the method comprising
identifying a driver of a vehicle and requesting a driving profile of the driver from a remote server,
evaluating the driver's consciousness level,
evaluating tire pressure levels of each tire installed on the vehicle, and
informing the driver prior to the vehicle being driven if the driver's driving profile, consciousness level or the tire pressure levels fall outside a set of predetermined safety conditions.

In one preferred feature, the method further comprises
updating the driver's driving profile while the vehicle is being driven,
storing the updated driver's driving profile temporarily within an onboard memory, and
transmitting the updated driver's driving profile from the onboard memory to the remote server.

In another embodiment, identifying the driver of a vehicle comprises fingerprint scanning and extracting information stored in a smart card type identity card.

According to one feature, evaluating the driver's consciousness level comprises analyzing the driver's electroencephalogram waveforms.

According to yet another feature, evaluating the tire pressures comprises wirelessly measuring the air pressure levels of the installed tires.

In yet another embodiment of the present invention, the driver's profile includes occurrences of driving violations.

According to one preferred feature, the driving violations include driving above a predetermined speed limit, harsh acceleration, harsh deceleration, over-speeding period, idling period, driver's eyes closure, reckless lane change, tailgating, and drowsiness.

In another embodiment of the present invention, the communication of the driver's driving profile to and from the remote server is done wirelessly.

### BRIEF DESCRIPTION OF THE DRAWINGS

The invention is illustrated, but not limited, by the following description of preferred embodiments, that is given by way of example only with reference to the accompanying drawings, in which:
Figure 1 illustrates the different types of data communicated between the vehicle side of a road safety system and a remote server in accordance with an embodiment of the present invention.
Figure 2 shows some of the primary hardware components of the road safety system in accordance with an embodiment of the present invention.
Figure 3 illustrates a preferred installation location of a GPS transponder, which is one of the standard hardware components of the road safety system in accordance with an embodiment of the present invention.
Figure 4 shows a camera mounted on a suction cup which is to be installed on the vehicle's windscreen in accordance with an embodiment of the present invention.
Figure 4A illustrates the recommended installation angle of the front camera in order for the camera to obtain the required field of view in front of the vehicle.
Figure 4B illustrates the recommended installation angle of the back camera in order for the camera to obtain the required field of view behind the vehicle.
Figure 5 shows the signal receiver of the electroencephalogram (EEG) headband with a standard USB connector in accordance with an embodiment of the present invention.
Figure 5A shows the electroencephalogram (EEG) headband in accordance with an embodiment of the present invention.
Figure 6 illustrates the fingerprint reader required as part of the components of the road safety system to identify the driver in accordance with an embodiment of the present invention.
Figure 7 shows how the road safety system's onboard unit receives power from a typical passenger vehicle.
Figure 7A illustrates all the external peripherals that are connected to the onboard unit of the road safety system in accordance with an embodiment of the present invention.
Figure 8 is a screen capture of the graphic user interface shown on the display of the road safety system's onboard unit.
Figure 9 shows two score cards, one detailing the drivers' driving profiles and the other detailing the vehicles' tire pressure conditions.

### DETAILED DESCRIPTION

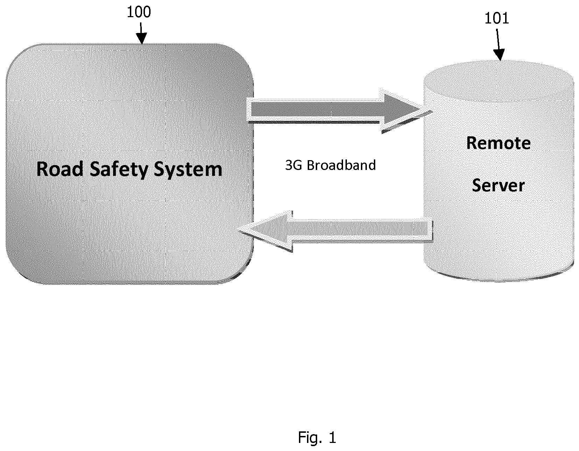

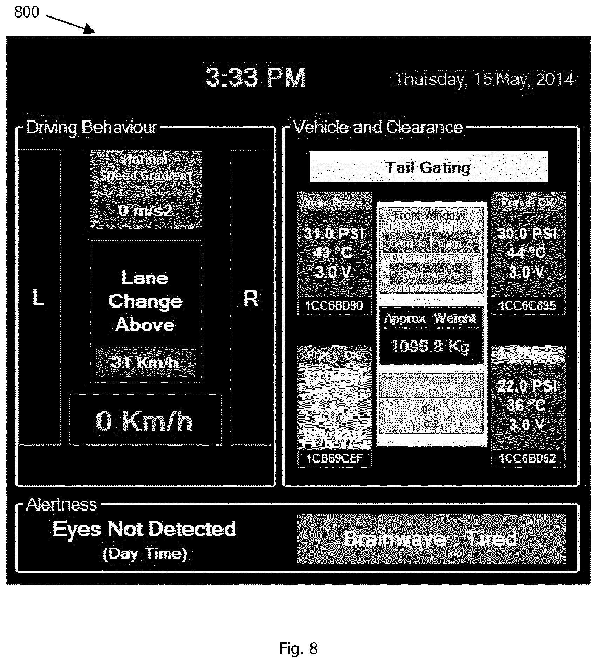

A road safety system, in an embodiment of the present invention, is disclosed in Figure 1. The system 100 comprises mainly an onboard unit 202, which acts as a central processing unit or the brain of the vehicle side, five types of peripheral devices including cameras 200, 201, global positioning system (GPS) transponder 205, tire pressure monitoring system (TPMS) 203 and an electroencephalogram (EEG) reading device, which comprises a EEG headband 501 and an EEG signal receiver 500 with a standard USB connector, and a fingerprint and identity card reader / biometric reader 600. The onboard unit 202 further contains a display, which is used to present a graphic user interface 800 as illustrated in Figure 8, which is visible while the driver is behind the wheels.

The system 100 is typically pre-installed in a vehicle, and in the present embodiment, it communicates wirelessly with a remote server 101 using a plug-in 3G dongle.

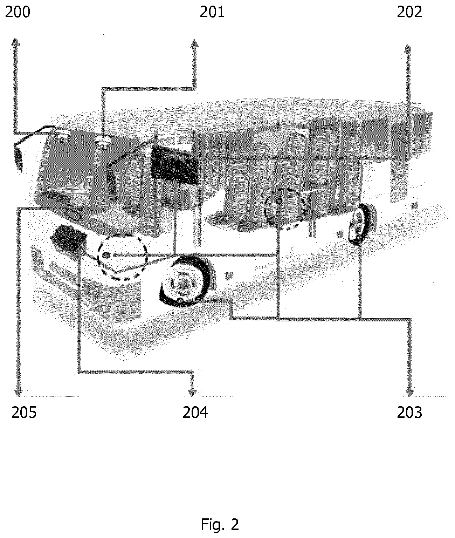

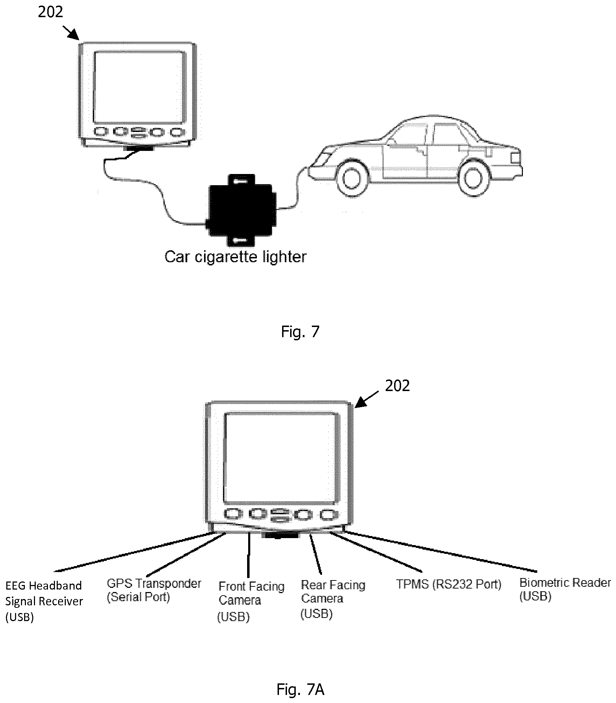

As can be seen in Figure 2, since the road safety system 100 is composed of separate components, they can be easily customized, adjusted and installed in different types of vehicles. As can be further seen in Figure 2, a bus is being used as an example for the system's installation. The onboard unit 202 is installed with its display facing the driver. The onboard unit 202 is installed using a car mount holder (not shown), and is powered by a cigarette lighter adaptor as shown in Figure 7. As shown in Figure 7A, the onboard unit 202 has multiple inputs, and these inputs are used to collect data from the connected peripheral devices as mentioned above.

To install the tire pressure monitoring system sensors, battery cells are loaded into each sensor's cap. These commercially available sensors are readily screwed into the chassis of the bus. The tire pressure monitoring system 203 comprises wireless tire pressure sensors and for the present embodiment, the sensors' signals are received by a high frequency repeater, and the repeater is connected to the onboard unit 202 via an RS232 port.

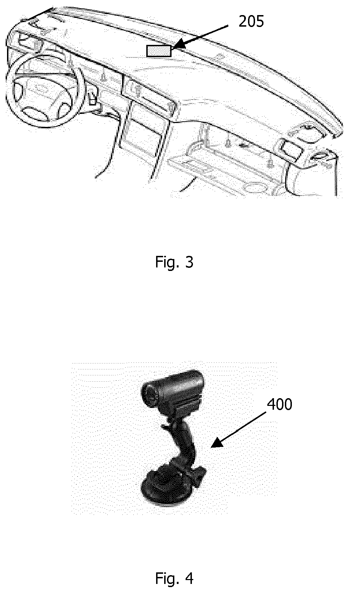

The GPS transponder 205 as shown in Figure 3, can be installed anywhere on the vehicle's dashboard, as long as it can receive the required satellite signals from the GPS satellites orbiting the earth. In the present embodiment, the GPS transponder 205 is connected to the onboard unit 202 through a serial port.

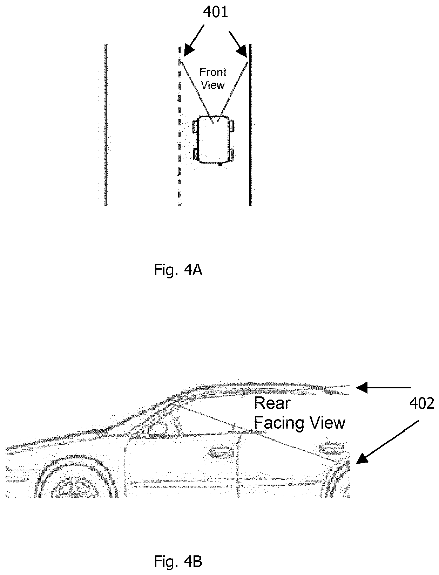

A rear facing camera 200 (rear camera) and a front facing camera 201 (front camera) are both installed on the bus' windscreen using suction cup mounting devices 400 such as the one shown in Figure 4 or other types mounting devices, and their positions are adjusted so that the rear facing camera 200 can get a wide enough angle 402 to get a clear view of the driver's face, as shown in Figure 4B, while the front facing camera 201 can get an optimal angle view 401 of the traffic ahead of the vehicle, as shown in Figure 4A. Both cameras are connected to the onboard unit 202 via USB connections.

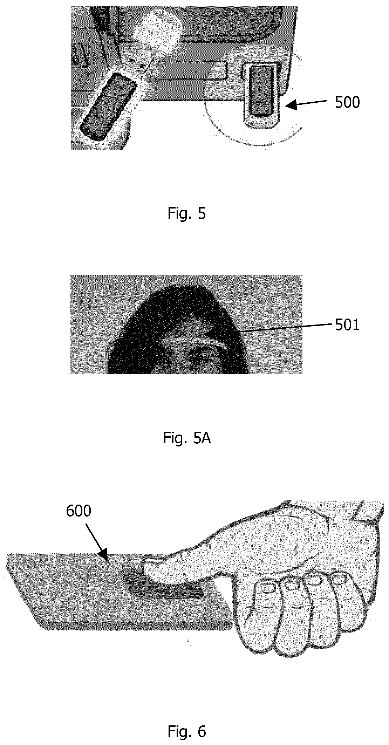

The electroencephalogram (EEG) signal receiver 500 as shown in Figure 5, is plugged into and powered by a USB port found on the onboard unit 202. The EEG signal receiver 500 receives brainwave signals from the wireless EEG headband 501. The EEG headband contains fourteen electrodes. The driver is required to wear the headband 501 over the forehead before engine ignition, and keep the headband over his or her forehead while driving, as shown in Figure 5A. The driver's brainwaves are collected in real time and fed into the onboard unit 202 for analyzing.

In the present road safety system, the operating system installed in the onboard unit 202 looks for brainwaves that suggest a person's consciousness or awareness, in three categories. They are sleepy, normal or alert. A sleepy or drowsy driver will be relaxed, passive and unfocused, and these traits could be easily detected by the EEG reading device. A driver who is conscious (and considered normal) will be detected as passive and focused. An alert driver on the other hand, is highly focused and will record certain spikes in his or her EEG signals.

The fingerprint and identity card reader / biometric reader 600 as shown in Figure 6, is a commercially available device, and as commonly known, these devices are readily powered by a USB port. It is to be noted that the identity card reader portion of the reader device 600 reads smart card type identity cards. In the present embodiment, the reader 600 is connected to a USB port of the onboard unit 202. All fingerprint and identity card information collected by the device are fed into the onboard unit 202.

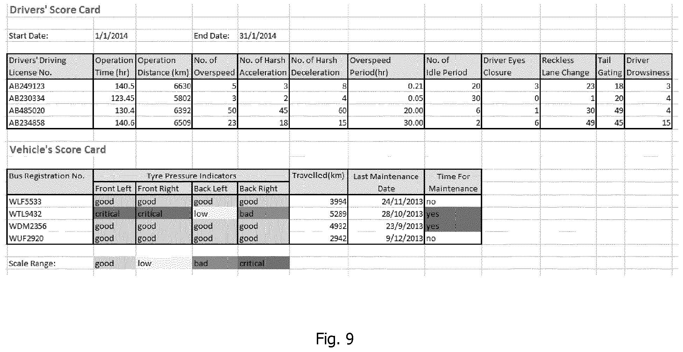

Once the onboard unit 202 is turned on, the preinstalled road safety system's operating system will load and the system is ready to receive data from its connected peripherals. Before the vehicle engine is ignited, the driver is required to identify himself or herself to the system. The driver is required to use his or her thumbprint and identity card to identify himself or herself to the system. A driver's driving profile is stored on the remote server 101, and a separate profile for the vehicle is also stored on the remote server 101. These profiles are stored in "score cards" which can be presented in a tabular format as shown in Figure 9. As can be seen in these score cards, each driver's driving profile contain a list of items, starting with operation time, operation distance, and followed by nine items that are considered driving violations by the present road safety system. The driving violations are: driving above a predetermined speed limit ("over-speeding"), harsh acceleration, harsh deceleration, over-speeding period, idling period, driver's eyes closure, reckless lane change, tailgating, and drowsiness. As Fig. 9 and represents a particular embodiment of the invention, its contents should not be construed as exhaustive. Other forms of violations can be recorded and stored within the driver's profile as needed. The vehicle's profile on the other hand is used to store the recorded tire pressures, distance travelled, latest maintenance date and to also inform the driver when vehicle maintenance is due.

If the system determines that the driver's driving history is less than encouraging, based on predetermined values of each of the nine items in the driving profile, the system will alert the driver through the graphic user interface 800 accordingly. Similarly, if the vehicle's maintenance is overdue, the system will also alert the driver through the graphic user interface 800 accordingly.

At this time, the driver is required to put on the EEG headband so that the system may analyze the driver's consciousness level. If the driver's EEG pattern indicates that he or she is sleepy, the system will alert the driver of that fact through the graphic user interface 800.

Furthermore, if any of the tires are not sufficiently pressurized or if the vehicle is overloaded, based on the pressure reading of the tires, the system will also inform the driver through the graphic user interface 800 in similar fashion.

The overloaded indicator on the graphic user interface 800 will be triggered by a sudden increase in tire pressure (discounting temperature variance since the vehicle is not moving). The derivation of this is from P = F/A, where pressure P is known from the tire pressure sensor, and A is the surface are of the tire thread touching the road surface.

The value of A is measured when the tire is pumped to its optimum recommended pressure, and the vehicle is unloaded completely so that it achieves it curb weight as specified by the vehicle manufacturer.

As the system 100 is not connected to the vehicle's ignition system, it will not prevent the driver from starting the vehicle's engine even if any safety issues are detected. However, any alerts raised by the system 100 and then ignored by the driver will be sent to the remote server 101. Refusing to heed the system's warning is considered a form of driving violation, and such violation will be recorded and stored in the driver's driving profile.

If for any event the system is unable to obtain the driver's driving profile from the remote server, due to no internet connection, power outage at the remote server 101, or any other reason that prevents data communication between the system and the remote server 101, the system will first store a request for the driver's profile temporarily. Once data communication is resumed, the system will automatically retrieve the driver's profile from the remote server 101.

Under this condition, the system will determine if the driver is fit to drive the vehicle and if the vehicle is safe for driving based only on the data that is readily available, such as those from the EEG reading device, the rear facing camera 200 and the tire pressure sensors.

Once the vehicle engine has been started, and the vehicle has started moving, the GPS transponder will acquire the vehicle's position using the GPS satellites and use them to determine the vehicle speed. Once the GPS transponder has detected that the vehicle has started moving, the system will initiate detection of driving above a predetermined speed limit ("over-speeding"), harsh acceleration, harsh deceleration, over-speeding period, idling period, driver's eyes closure, reckless lane change, tailgating, and drowsiness.

The system 100 will collect real time data from the five peripheral devices connected to the onboard unit 202 according to the following paragraphs.

The cameras 200, 201 will begin recording video simultaneously once the vehicle starts moving. The onboard unit 202 analyses the video in real time, frame by frame. The video from the front (facing) camera 201 will be used by the image processing module to analyze the movement of the car. The image processing module can detect lane change and tailgating using the images received from the camera 201. The video feed from the rear (facing) camera 200 to detect the driver's face, in particular the driver's expression. The same image processing module installed within the onboard unit 202 will detect eye closures.

When abrupt lane changes and tailgating are detected, the onboard unit will alert the driver on the graphic user interface, and store every occurrence of these incidents on its temporary memory. The temporary memory may be a 2.5" hard disk drive (not shown), multiple 2.5" hard disk drives, a solid-state drive, a USB drive or the like.

Since the GPS transponder can measure the vehicle's speed, events such as driving above a predetermined speed limit ("over-speeding"), harsh acceleration, harsh deceleration, over-speeding period, and idling can be easily calculated. Again, every occurrence of these incidents are stored on the onboard unit's temporary memory.

For the rear (facing) camera 200, the image processing module will detect if the driver is feeling drowsy (and therefore closes his eyes or her eyes for long periods of time), and instruct the onboard unit to alert the driver either visually or audibly. Again, every occurrence of these incidents are stored on the onboard unit's temporary memory.

The occurrences of all the above incidents will be treated as driving violations, and will be eventually stored in the driver's driving profile. To do this, the onboard unit 202 sends the updated driver's driving profile data to the remote server 101 via the above mentioned 3G dongle. It should be noted that the dongle in this example can be easily replaced with another that is to communicate via the LTE network, a GSM network or the like, and can also be easily swapped with another performing the same communication functions and methods but using other types of wireless telecommunication protocols.

When the vehicle is in motion, the tire pressure levels of each tire installed on the vehicle are constantly monitored. Each wireless tire pressure sensor constantly provides the driver with tire pressure readings through the graphic user interface 800 of the onboard unit 202. If any anomalies in tire pressures are detected, the on board unit 202 will alert the driver immediately.

Communication between the onboard unit 202 and the remote server 101 does not need to be constant. A service running in the background of the road safety system's operating system will constantly check for 3G internet connection, and will only send the updated data to the remote server 101 when the quality of the radio (3G) signal is conducive for communication. In the present embodiment, the service runs every three minutes, but this can be easily calibrated as desired.

The remote server 101 performs four complementary functions for the present road safety system, and they are listed below:

### 1) Driver profile check

Before engine ignition, the driver is requested to slot his or her smart card type identity card into the identity card reader. He or she is also required to supply his or her thumbprint to the thumbprint device. At this point, the remote server 101 will check if the driver has been blacklisted and communicate the checking result back to the onboard unit 202.

### 2) Archive driving violations

The nine items that are considered driving violations by the present road safety system are driving above a predetermined speed limit ("over-speeding"), harsh acceleration, harsh deceleration, over-speeding period, idling period, driver's eyes closure, reckless lane change, tail gating, and drowsiness. As already mentioned earlier in the description, when any of these events are detected, they are updated and stored at the remote server 101. The exact time of, and each violation will be bound to each driver's driving profile.

### 3) Production of a driver's or vehicle's score card

Using the records stored in the remote server 101, a "score card" for every driver or vehicle can be tabulated and printed, and compiled as necessary for statistical studies and other purposes.

### 4) Retrieval of recorded driving videos

Recorded videos of each journey can be copied and transferred from the onboard unit 202. The recorded videos are broken into 10-second clips for each journey and are stored in the temporary memory such as a 2.5" hard disk drive (not shown), multiple 2.5" hard disk drives, a solid-state drive, a USB drive or the like in the onboard unit 202. In the event of an accident, the video clips can be retrieved for analysis or to be used as evidence.

The hardware specification of the onboard unit 202 of the road safety system according to an embodiment of the present invention is listed in the following table.

| Component | Description |
|---|---|
| MIC+HP (Head Phone Out) | 2.5mm audio jack, functions for MIC, and, Headphone out (Y-cable). |
| USB3.0 and eSATA Combo ports | 2 x Combo port combine USB and eSATA Outer-port: USB3.0, plus, eSATA2.0 Inner-port: USB3.0, plus, eSATA3.0 |
| Security Lock | Security key could release the front door (for removable 2.5" storage device) and the protection cover (for main power button and fuse). Magnets are used to hold the front door when it is closed. |
| Power Switch | Power switch, controls main power inlet or cut off |
| Fuse | 10A little fuse to protect the inlet power |
| Access the removable 2.5" storage device | An external accessible and removable 2.5" storage drive is behind the front door. |
| PWR | Main power input, both 12V and 24V vehicle powering are allowed |
| | (withstand range 11∼30V input voltage) |
| UPS (Optional device) | Connect to optional UPS power unit for backup power |
| 4 x Digital I/O | 1 x 16-pin Micro Fit connector for digital I/O, 4-in and 4-out |
| | Input channels with isolation protected |
| | Output channels equipped with relay and rating up to 24V |
| | Remark: No real power offered from output channels |
| | Digital-High: above ∼ 24V |
| | Digital-Low: 0 ∼ 5V |
| CAN Bus | 1 x 4-pin Micro Fit connector for CAN Bus (2.0) |
| Smart Display | 1 x 26-pin D-Sub female connector to support 18-bit LVDS panel display, this integrated port also contains USB x 1, COM x 1 and 12V power to device which up links with it. |
| HDMI | 1 x 21-pin standard HDMI port |
| LAN and USB | 1 x RJ-45 LAN and 2 x USB2.0 ports vertical line up |
| CRT/ HDTV | 1 x 15-pin DSub connector for CRT output |
| COM Port | 1 x RS232 |
| | 1 x RS232/ 422/ 485 (BIOS selection, no H/W jumper hat needs) |
| GND | Chassis ground for grounding of whole system |
| Antenna Plug | 1) 1 x GPS antenna plug |
| | 2) 1 x 3.5G antenna plug |
| | 3) 2 x WiFi antenna plug |
| | (reserved one for WiFi module which can support a 2^{nd} antenna) |
| Bottom View | 2 x 5V 4000RPM blower embedded |
| Side View | Access SIM card from right side |
| Construction | Aluminum/ Steel/ ABS + PC |
| Chassis | Color Black |
| Core Logic | |
| Sandy Bridge | Intel QM67 chipset CPU with i5-2510E/ 2-core |
| Memory | Default with 4GB DDR3 SODIMM |
| Storage | 1 x removable 2.5" storage device, Intel SSD 320 Series recommended , 40GB |
| | 1 x optional 8GB wild temperature SATA-DOM |
| Cooling | Active cooling with 2 x 5V blower |
| Mounting Bracket | Supported |
| Dimensions | 213.8(W) x 82.0(H) x 229.98(D) mm |
| | Note. Width and Depth dimensions are including the brackets |
| Operating Temperature | -20°C ∼ 60°C (32°F ∼ 140°F) |
| Storage Temperature | -40°C ∼ 85°C |
| Relative Humidity | 5∼95%, non-condensing |
| Vibration | |
| | Operating: MIL-STD-810F, Method 514.5, |
| | |
| | Category 20, Ground Vehicle - Highway Truck (3 axes) Non-operating: MIL-STD-810F, Method 514.5, |
| | |
| | Category 24, Minimum Integrity Test (3 axes) |
| Shock | |
| | MIL-STD-810F, Method 516.5, Procedure I, sawtooth: |
| | Operating: 20G / 11msec Non-operating: 40G/11msec |

### Operating System

The road safety system according to an embodiment of the present invention uses Microsoft's Windows 7 embedded as its main OS. It is set up with Intel OpenCV framework v2.3.1 and Emotiv SDK v2.0.0.20.

### The Master Application

The Master Application is a C# application which compiled all the Road Safety System sensors results. These results are from the modules below:
1) Lane Change Detection
2) Eye Closure Detection
3) Brainwave Alertness Detection
4) Tire Pressure (and Temperature)
5) Speed Monitoring
6) Overweight Approximation
7) Hard Braking / Hard Acceleration

A clear display will alert the driver of all the safety indicators as shown in Figure 8.

Therefore, it is obvious from that the above description that the present invention, road safety system that is able to provide for a safer driving experience for all users can be implemented in existing road vehicles.

Although the above description has focused primarily on a particular embodiment of the invention whereby the system is installed in a bus, it is obvious that the components described for the system can be easily adopted for other kinds of vehicles such as passenger cars, construction vehicles and the like. The system may also be adopted for vehicles using hybrid engines or fully electric powered vehicles. The communication methods and protocols between the hardware devices and between the onboard unit and the remote server are merely examples for the particular embodiment mentioned herein, so should not be construed as restrictive as well. Additionally, the GPS positioning function may be easily replaced by other satellite positioning systems such as GLONASS, BeiDou and Galileo.

It is understood that the invention may be embodied in numerous other ways without departing from the scope of the invention as defined by the appended claims.

## Claims

1. A road safety system for pre-installation in a vehicle, the system comprising
means to identify a driver and request a driving profile of the driver from a remote server (101), and **characterized by**
means to evaluate the driver's consciousness level,
means to evaluate tire pressure levels of each tire installed on the vehicle, and means to inform the driver prior to the vehicle being driven if the driver's driving profile, consciousness level or the tire pressure levels fall outside a set of predetermined safety conditions.

2. A road safety system according to claim 1, the system further comprising
means to update the driver's driving profile while the vehicle is being driven,
means to store the updated driver's driving profile temporarily within an onboard memory, and
means to transmit the updated driver's driving profile from the onboard memory to the remote server (101).

3. A road safety system according to claim 1 or 2, wherein the means to identify the driver comprises a fingerprint scanner and an identity card reader.

4. A road safety system according to any one of claims 1 through 3, wherein the means to evaluate the driver's consciousness level comprises an electroencephalogram reader.

5. A road safety system according to any one of claims 1 through 4, wherein the means to evaluate tire pressures comprises a wireless tire pressure sensor.

6. A road safety system according to any one of claims 1 through 5, wherein the driver's profile includes occurrences of driving violations.

7. A road safety system according to claim 6, wherein the driving violations include driving above a predetermined speed limit, harsh acceleration, harsh deceleration, over-speeding period, idling period, driver's eyes closure, reckless lane change, tailgating, and drowsiness.

8. A road safety system according to any one of claims 1 through 7, wherein communication between the system and the remote server (101) is done wirelessly.

9. A method for the improvement of road safety, the method comprising
identifying a driver of a vehicle and requesting a driving profile of the driver from a remote server (101), and **characterized by**
evaluating the driver's consciousness level,
evaluating tire pressure levels of each tire installed on the vehicle, and
informing the driver prior to the vehicle being driven if the driver's driving profile, consciousness level or the tire pressure levels fall outside a set of predetermined safety conditions.

10. A method for the improvement of road safety according to claim 9, the method further comprising
updating the driver's driving profile while the vehicle is being driven,
storing the updated driver's driving profile temporarily within an onboard memory, and
transmitting the updated driver's driving profile from the onboard memory to the remote server (101).

11. A method for the improvement of road safety according to claim 9 or 10, wherein identifying the driver of a vehicle comprises fingerprint scanning and extracting information stored in a smart card type identity card.

12. A method for the improvement of road safety according to any one of claims 9 to 11, wherein evaluating the driver's consciousness level comprises analysing the driver's electroencephalogram waveforms.

13. A method for the improvement of road safety according to any one of claims 9 to 12, wherein evaluating the tire pressures comprises wirelessly measuring the air pressure levels of the installed tires.

14. A method for the improvement of road safety according to any one of claims 9 to 13, wherein the driver's profile includes occurrences of driving violations.

15. A method for the improvement of road safety according to claim 14, wherein the driving violations include driving above a predetermined speed limit, harsh acceleration, harsh deceleration, over-speeding period, idling period, driver's eyes closure, reckless lane change, tailgating, and drowsiness.

16. A method for the improvement of road safety according to any one of claims 9 to 15, wherein the communication of the driver's driving profile to and from the remote server (101) is done wirelessly.

## Patentansprüche

1. Verkehrssicherheitssystem zur Vorinstallation in einem Fahrzeug, wobei das System Folgendes umfasst:
ein Mittel zum Identifizieren eines Fahrers und zum Anfordern eines Fahrprofils des Fahrers von einem entfernten Server (101), und das System durch Folgendes gekennzeichnet ist:
ein Mittel zum Auswerten des Bewusstseinsniveaus des Fahrers,
ein Mittel zum Auswerten von Reifendruckwerten jedes auf dem Fahrzeug installierten Reifens und
ein Mittel, das den Fahrer vor dem Fahren des Fahrzeugs informiert, wenn das Fahrprofil des Fahrers, das Bewusstseinsniveau oder die Reifendruckwerte außerhalb eines Satzes vorbestimmter Sicherheitsbedingungen liegen.

2. Verkehrssicherheitssystem nach Anspruch 1, wobei das System ferner Folgendes umfasst:
ein Mittel zum Aktualisieren des Fahrprofils des Fahrers, während das Fahrzeug gefahren wird,
ein Mittel zum temporären Speichern des aktualisierten Fahrprofils des Fahrers in einem Bordspeicher und
ein Mittel zum Übertragen des aktualisierten Fahrprofils des Fahrers von dem Bordspeicher zu dem entfernten Server (101).

3. Verkehrssicherheitssystem nach Anspruch 1 oder 2, wobei das Mittel zum Identifizieren des Fahrers einen Fingerabdruckscanner und einen Identitätskartenleser umfasst.

4. Verkehrssicherheitssystem nach einem der Ansprüche 1 bis 3, wobei das Mittel zum Auswerten des Bewusstseinsniveaus des Fahrers ein Elektroenzephalogramm-Lesevorrichtung umfasst.

5. Verkehrssicherheitssystem nach einem der Ansprüche 1 bis 4, wobei das Mittel zum Auswerten von Reifendrücken einen drahtlosen Reifendrucksensor umfasst.

6. Verkehrssicherheitssystem nach einem der Ansprüche 1 bis 5, wobei das Fahrerprofil das Auftreten von Fahrverstößen umfasst.

7. Verkehrssicherheitssystem nach Anspruch 6, wobei die Fahrverstöße Folgendes umfassen: Fahren über einem vorbestimmten Geschwindigkeitsgrenzwert, starke Beschleunigung, starke Verzögerung, Überdrehzahlzeit, Leerlaufzeit, Augenverschließen des Fahrers, rücksichtsloser Fahrspurwechsel, dichtes Auffahren und Schläfrigkeit.

8. Verkehrssicherheitssystem nach einem der Ansprüche 1 bis 7, wobei die Kommunikation zwischen dem System und dem entfernten Server (101) drahtlos erfolgt.

9. Verfahren zur Verbesserung der Verkehrssicherheit, wobei das Verfahren Folgendes umfasst:
Identifizieren eines Fahrers eines Fahrzeugs und das Anfordern eines Fahrprofils des Fahrers von einem entfernten Server (101), und das Verfahren durch Folgendes gekennzeichnet ist:
Auswerten des Bewusstseinsniveaus des Fahrers,
Auswerten der Reifendruckwerte jedes auf dem Fahrzeug installierten Reifens und
Informieren des Fahrers, bevor das Fahrzeug gefahren wird, wenn das Fahrprofil des Fahrers, das Bewusstseinsniveau oder die Reifendruckwerte außerhalb eines Satzes vorbestimmter Sicherheitsbedingungen liegen.

10. Verfahren zur Verbesserung der Verkehrssicherheit nach Anspruch 9, wobei das Verfahren ferner Folgendes umfasst:
Aktualisieren des Fahrprofils des Fahrers, während das Fahrzeug gefahren wird,
temporäres Speichern des aktualisierten Fahrprofils des Fahrers in einem Bordspeicher und
Übertragen des aktualisierten Fahrprofils des Fahrers von dem Bordspeicher zu dem entfernten Server (101).

11. Verfahren zur Verbesserung der Verkehrssicherheit nach Anspruch 9 oder 10, wobei das Identifizieren des Fahrers eines Fahrzeugs eine Fingerabdruckabtastung und ein Extrahieren von Informationen umfasst, die in einer Chipkarten-Identitätskarte gespeichert sind.

12. Verfahren zur Verbesserung der Verkehrssicherheit nach einem der Ansprüche 9 bis 11, wobei das Auswerten des Bewusstseinsniveaus des Fahrers das Analysieren der Elektroenzephalogramm-Wellenformen des Fahrers umfasst.

13. Verfahren zur Verbesserung der Verkehrssicherheit nach einem der Ansprüche 9 bis 12, wobei das Auswerten der Reifendrücke das drahtlose Messen der Luftdruckniveaus der installierten Reifen umfasst.

14. Verfahren zur Verbesserung der Verkehrssicherheit nach einem der Ansprüche 9 bis 13, wobei das Fahrerprofil das Auftreten von Fahrverstößen umfasst.

15. Verfahren zur Verbesserung der Verkehrssicherheit nach Anspruch 14, wobei die Fahrverstöße Folgendes umfassen: Fahren über einem vorbestimmten Geschwindigkeitsgrenzwert, starke Beschleunigung, starke Verzögerung, Überdrehzahlzeit, Leerlaufzeit, Augenverschließen des Fahrers, rücksichtsloser Fahrspurwechsel, dichtes Auffahren und Schläfrigkeit.

16. Verfahren zur Verbesserung der Verkehrssicherheit nach einem der Ansprüche 9 bis 15, wobei die Kommunikation des Fahrprofils des Fahrers zu und von dem entfernten Server (101) drahtlos erfolgt.

## Revendications

1. Un système de sécurité routière destiné à une pré-installation dans un véhicule, le système comprenant
un moyen d'identification d'un conducteur et de demande d'un profil de conduite du conducteur à partir d'un serveur distant (101), et **caractérisé par**
un moyen d'évaluation du niveau de conscience du conducteur,
un moyen d'évaluation du niveau de pression des pneus de chaque pneu installé sur le véhicule, et
un moyen d'information du conducteur avant que le véhicule ne soit conduit si le profil de conduite, le niveau de conscience du conducteur ou le niveau de pression des pneus se situent à l'extérieur d'un ensemble de conditions de sécurité prédéterminées.

2. Un système de sécurité routière selon la Revendication 1, le système comprenant en outre un moyen d'actualisation du profil de conduite du conducteur pendant que le véhicule est conduit,
un moyen de conservation en mémoire du profil de conduite actualisé du conducteur temporairement à l'intérieur d'une mémoire embarquée, et
un moyen de transmission du profil de conduite actualisé du conducteur de la mémoire embarquée vers le serveur distant (101).

3. Un système de sécurité routière selon la Revendication 1 ou 2, où le moyen d'identification du conducteur comprend un scanner d'empreinte digitale et un lecteur de carte d'identité.

4. Un système de sécurité routière selon l'une quelconque des Revendications 1 à 3, où le moyen d'évaluation du niveau de conscience du conducteur comprend un lecteur d'électroencéphalogramme.

5. Un système de sécurité routière selon l'une quelconque des Revendications 1 à 4, où le moyen d'évaluation de pression des pneus comprend un capteur de pression des pneus sans fil.

6. Un système de sécurité routière selon l'une quelconque des Revendications 1 à 5, où le profil de conducteur comprend des occurrences d'infractions de conduite.

7. Un système de sécurité routière selon la Revendication 6, où les infractions de conduite comprennent une conduite au-dessus d'une limite de vitesse prédéterminée, une accélération brusque, une décélération brusque, une période de sur-vitesse, une période de conduite au ralenti, une fermeture des yeux du conducteur, un changement de voie imprudent, un talonnage et une somnolence.

8. Un système de sécurité routière selon l'une quelconque des Revendications 1 à 7, où une communication entre le système et le serveur distant (101) est effectuée de manière non filaire.

9. Un procédé d'amélioration de la sécurité routière, le procédé comprenant
l'identification d'un conducteur d'un véhicule et la demande d'un profil de conduite du conducteur à partir d'un serveur distant (101), et **caractérisé par**
l'évaluation du niveau de conscience du conducteur,
l'évaluation du niveau de pression des pneus de chaque pneu installé sur le véhicule, et
l'information du conducteur avant que le véhicule ne soit conduit si le profil de conduite, le niveau de conscience du conducteur ou le niveau de pression des pneus se situent à l'extérieur d'un ensemble de conditions de sécurité prédéterminées.

10. Un procédé d'amélioration de la sécurité routière selon la Revendication 9, le procédé comprenant en outre
l'actualisation du profil de conduite du conducteur pendant que le véhicule est conduit,
la conservation en mémoire du profil de conduite actualisé du conducteur temporairement à l'intérieur d'une mémoire embarquée, et
la transmission du profil de conduite actualisé du conducteur de la mémoire embarquée vers le serveur distant (101).

11. Un procédé d'amélioration de la sécurité routière selon la Revendication 9 ou 10, où l'identification du conducteur d'un véhicule comprend le balayage d'une empreinte digitale et l'extraction d'informations conservées en mémoire dans une carte d'identité de type carte à puce.

12. Un procédé d'amélioration de la sécurité routière selon l'une quelconque des Revendications 9 à 11, où l'évaluation du niveau de conscience du conducteur comprend l'analyse de formes d'onde de l'électroencéphalogramme du conducteur.

13. Un procédé d'amélioration de la sécurité routière selon l'une quelconque des Revendications 9 à 12, où l'évaluation de la pression des pneus comprend la mesure de manière non filaire de niveaux de pression d'air des pneus installés.

14. Un procédé d'amélioration de la sécurité routière selon l'une quelconque des Revendications 9 à 13, où le profil de conducteur comprend des occurrences d'infractions de conduite.

15. Un procédé d'amélioration de la sécurité routière selon la Revendication 14, où les infractions de conduite comprennent une conduite au-dessus d'une limite de vitesse prédéterminée, une accélération brusque, une décélération brusque, une période de sur-vitesse, une période de conduite au ralenti, une fermeture des yeux du conducteur, un changement de voie imprudent, un talonnage et une somnolence.

16. Un procédé d'amélioration de la sécurité routière selon l'une quelconque des Revendications 9 à 15, où la communication du profil de conduite du conducteur à partir du et vers le serveur distant (101) est effectuée de manière non filaire.
